# EUROPEAN PATENT APPLICATION

(11) **EP 1 138 818 A1**
(43) Date of publication of application: **04.10.2001**
(21) Application number: 99950432.7
(22) Date of filing: 15.10.1999
(51) Int. Cl.: D06F 18/00

(54) **A METHOD OF WASHING CLOTH WITH OXYGEN-ATOM INSTEAD OF DETERGENT AND A WASHING MACHINE THEREOF**

(30) Priority: 16.10.1998 CN 98120518
(71) Applicant: Yuan, Suoliang, Beijing 100045 (CN)
(72) Inventor: YUAN, Suoliang, Beijing 100045 (CN); LI, Zengshui, Beijing 102200 (CN)
(74) Representative: Gemmell, Peter Alan, Dr.
(86) International application number: CN9900163
(87) International publication number: WO0023645

(57) **Abstract**

The invention relates to a textile washing method using atomic oxygen instead of detergent and a washing machine thereof. The method comprises steps of generating atomic oxygen and active ions, generating negative pressure etc. The washing machine comprises an inner case and a cover thereof placed in a washing tank, a porous barrier placed on the inner bottom wall of inner case and an atomic oxygen generator placed in the water of washing machine, a catalyst case, an air ventilating ceramic sand element and an isolation transformer placed on the inner bottom wall of outer casing, and an air pump and valves. When textiles are washed employing the method and washing machine of the invention, no detergent is utilized, pollution resulted from the washing powder or liquid can be eliminated, no tangling and wearing of washed textiles take place, the washed textile can be completely dried, water and power saving can reach 50% respectively.

## Description

### TECHNICAL FIELD

The invention relates to the field of washing, more specifically to a method of washing textile with atomic oxygen instead of detergent and a washing machine thereof.

### BACKGROUND ART

At present, either washing powder or liquid is applied in current textile washing methods of using hand washing or washing machines. Production and usage of washing powder or liquid should contaminate the environment seriously, result in public nuisance, and hurt the health of people and future generations. Problems of large amount of water and power consumption, wearing of washed textile, certain extent of tangling and incomplete drying of washed textile also exist in the current washing machines.

### SUMMARY OF THE INVENTION

For overcoming above shortcomings, the object of the invention is to provide a textile washing method without using washing powder or liquid.

Another object of the invention is to provide a washing machine for realization of above washing method.

Satisfactory washing effect can be attained by the washing method and machine, such as no tangling and wearing of washed textile, having sterilization role to the washed textile simultaneously, and saving water and power.

The object of the invention is mainly achieved by a conception of using atomic oxygen instead of washing powder or liquid. The specific technical solution thereof is as follows:

The textile washing method of the invention comprises two steps, in which the first step is generation of atomic oxygen and active ions instead of washing powder or liquid to remove dirt on the washed textiles and take part in sterilization; the second step is generation of negative pressure for taking water away from the washed textile as a substitute for centrifugal drying.

In the above washing method of the invention, a bubble generating step is further comprised between the first and second steps, in which further washing is performed to the washed textiles via an effect generating from bubble movement and ultrasonic wave produced by bubble bursting instead of an effect of pulsator and drum in current washing machine, so as to eliminate the shortcomings of angling and wearing resulted from the pulsator and drum.

In the above washing method of the invention, the atomic oxygen and active ions are generated by electrolyzing water, in which for electrolyzing water, voltage is 1.2-27V, electric current is 0.5-40A; negative pressure is generated from an air pump; and the bubbles are generated by the air pump and a ceramic sand element.

In the above washing method of the invention, said voltage preferred value is 5V, said electric current preferred value is 3A. In order to enhance the reaction of electrolyzing water to attain better washing effect, a catalyst, e.g salt or alkaline catalyst can also be added into the electrolytic water. Sodium chloride, potassium sulfate or magnesium sulfate can be used as salt catalyst. Aluminum hydroxide, sodium hydroxide or calcium hydroxide can be used as alkaline catalyst.

In the above washing method of the invention, the steps of generating atomic oxygen, active ions and bubbles can be carried out simultaneously.

The washing machine for realizing above washing method comprises an outer casing, a cap, a washing tank, a pedestal, a control means, a washing tank cover with tank-opening-lock function, a gas inlet valve and a pressure safety valve installed on the washing tank cover, a tank body support sustaining the tank, an inner case installed in the washing tank and an inner case cover having orifices, a porous barrier and its support installed on the inner bottom wall of inner case, a back plate installed between the bottom surface of inner case and the inner bottom wall of washing tank, and an atomic oxygen generator installed in the water of washing machine, a water inlet valve and a draining valve installed at the lower part of outer case, and an isolation transformer installed on the inner bottom wall of outer case, an air pump and a multipath valve having the their outlets communicated with the inner case, in which said atomic oxygen generator is composed of at least two sheets of oppositely placed metal plates, and the voltage of the generator is 1.2-27V, the electric current is 0.5-40A.

Said atomic oxygen generator can generate atomic oxygen and active ions simultaneously, which can decompose the dirt on the washed textiles rapidly, while atomic oxygen can also sterilize the textiles.

In order to improve washing effect, an air ventilating ceramic sand element is installed between the porous barrier and the inner bottom wall of the inner case, and the outlet of said air pump is communicated with the inner case via the air ventilating ceramic sand element. When the air pump is operating, air is pumped into the air ventilating ceramic sand element, massive bubbles are generated in many orifices where only air and no water can flow through. Impact force of these bubbles and ultrasonic wave generated by bubble bursting can assist the washing work, so that there are more satisfactory washing effect than that attained by simple application of atomic oxygen and active ions to the washed textile.

For speeding up the reaction of electrolyzing water so as to raise the speed of atomic oxygen and active ions generation and increase the amount of these particles, then to get satisfactory washing effect in a shorter washing time, a catalyst case charged with catalyst can also be installed in the water of washing machine, in which the catalyst can be a salt or alkaline catalyst. Sodium chloride, potassium sulfate, or magnesium sulfate can be used as salt catalyst; and aluminum hydroxide, sodium hydroxide or calcium hydroxide can be used as alkaline catalyst.

In above washing machine of the invention, said metal plates composing the atomic oxygen generator are iron plates, stainless steel plates, nickel plates, titanium plates, copper plates, aluminum plates, platinized metal plates or metal nets.

Textile washing method of the invention and the washing machine thereof have the advantages as follows:
(1) Using the atomic oxygen and active ions produced by the atomic oxygen generator instead of detergent, the dirt on the washed textiles can be quickly oxidized and decomposed by the activity thereof so as to get expected washing effect and sterilize the washed textiles.
(2) Cut off the power after the textiles thoroughly cleaned, the atomic oxygen will be rapidly reduced to molecular oxygen, therefore it is beneficial but not harmful to the environment.
(3) Pump in the air by the air pump, massive bubbles are produced via the air ventilating ceramic sand element. The impact force generated by the bubbles and the ultrasonic wave produced in bubble bursting can replace the effect of pulsator or drum in current washing machine, and assist in washing work, so that better washing effect can be attained.
(4) Since no mechanical rotary parts exist, no tangling and wearing of washed textiles take place.
(5) When air is extracted by the air pump, air can only be ventilated and not admitted into the washing tank, negative pressure has been produced in the tank, water is quickly boiled at normal temperature, steam is exhausted following the air, the washed textiles are dried. This negative pressure blotting method can be substituted for the centrifugal drying method, and its dryness degree is more thorough than that of centrifugal drying.
(6) Since the isolation transformer has been employed, washing electric supply is highly insulated with the earth, so that personal safety of operators is guaranteed.
(7) Since no detergent is employed, on one hand environmental pollution is thoroughly eliminated, on the other hand multiple times of rinsing and flushing with a large amount of water are not required, water and power saving can reach 50% respectively, consequently washing cost is lower.
(8) The washing machine of the invention is simple in structure, and a same vessel is used for washing and drying, therefore this washing machine has a small volume, a lightweight and a low cost.

### BRIEF DESCRIPTION OF THE DRAWINGS

FIG.1 is a cross-section structure schematic diagram of the washing machine for realizing the textile washing method of the invention;
FIG.2 is a schematic diagram for washing process control of said washing machine according to the invention.

### OPTIMUM REALIZATION MODE OF THE INVENTION

Incorporating with the attached drawings, an optimum realization mode of said washing machine in the invention should be described in detail as follows.

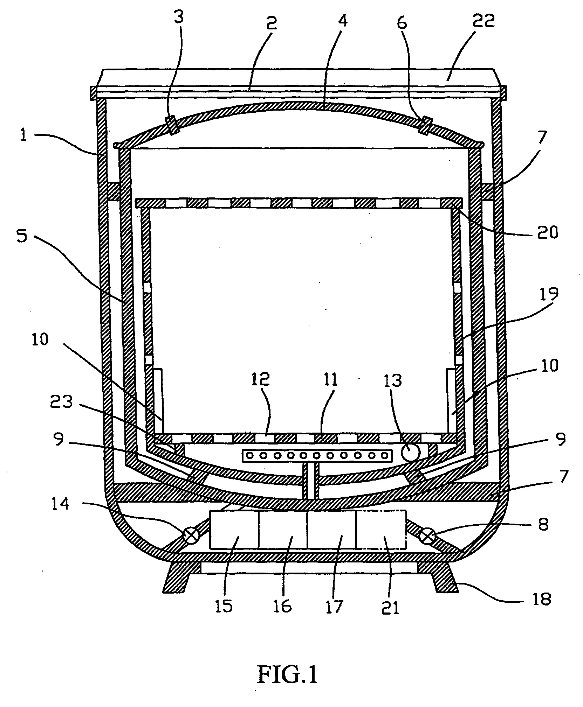

As shown in FIG.1, said washing machine of the invention is the machine which can realize three steps comprising generation of atomic oxygen and active ions, generation of bubbles and generation of negative pressure, and a catalyst is added into the washing water to attain optimum washing effect. The washing machine comprises an outer casing 1, a cap 2, a washing tank 5, a pedestal 18, a control means 22, a washing tank cover 4 with tank-opening-lock function, an gas inlet valve 3 and a pressure safety valve 6 installed on the washing tank cover 4, a tank body support 7 sustaining the washing tank 5, an inner case 19 formed by three joints of cylinders placed in the washing tank 5 and an inner case cover 20 having orifices, a porous barrier 11 and its support 23 installed at lower part of inner case 19, a back plate 9 installed between the bottom surface of inner case 19 and inner bottom wall of washing tank 5, two sheets of oppositely spaced platinized metal plates forming an atomic oxygen generator 10 installed on the porous barrier 11, an air ventilating ceramic sand element 12 and a catalyst case 13 charged with sodium chloride as catalyst installed between the porous barrier 11 and the inner bottom wall of inner case 19, an water inlet valve 8 and a draining valve 14 mounted at the lower part of outer casing 1 and an isolation transformer 15 installed on the inner bottom wall of outer casing 1, an air pump 16 and a multipath valve 17 having their outlets communicated with the air ventilating ceramic sand element 12, in which the voltage of atomic oxygen generator is 5V, and the electric current is 3A.

Atomic oxygen in the washing machine can also be generated by an ozone generator. If atomic oxygen are generated simultaneously by the atomic oxygen generator and the ozone generator, the ozone generator can be installed on the inner bottom wall of outer casing 1, which is represented by the dotted lines in FIG.1, and shown by symbol 21.

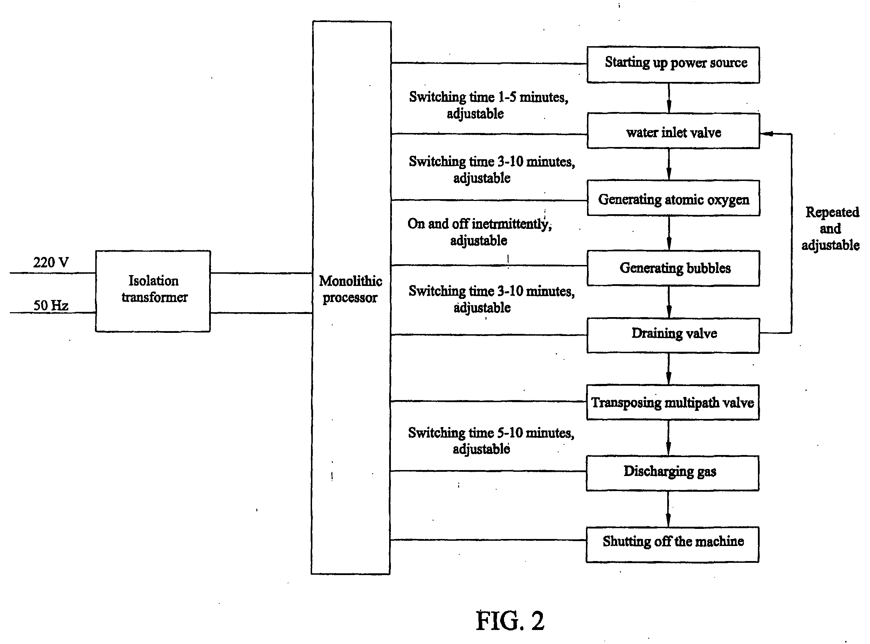

Working process of said washing machine according to the invention should be illustrated incorporating with FIG.1 and FIG. 2. When the textiles are required to be washed, select the inner case according to the amount of textiles, e.g. select the inner case 19 having three joint cylinders. Put the textiles into inner case 19, then start the machine, and turn on the water inlet valve 8 to introduce water. The switching time of water inlet valve 8 can be selected from 1 to 5 minutes according to water pressure until the water just overflows the textiles, and the water inlet valve shall be turned off at the selected time. Then the atomic oxygen generator 10 is energized, in order to electrolyze water and generate atomic oxygen and active ions, at the same time the air pump 16 is started, air is pumped into the air ventilating ceramic sand element 12 via the air pump 16, and massive bubbles shall be generated via the many orifices on the ceramic sand element which can only pass through air and no water. Under the effect of atomic oxygen and active ions, the dirt on the washed textiles in the inner case 19 shall be rapidly oxidized and decomposed to attain washing effect, and the washed textiles shall be sterilized by atomic oxygen. Impact force of said massive bubbles and ultrasonic wave generated by bubble bursting could assist in washing work to attain better washing effect. Switching time of atomic oxygen generator depends on the dirtiness of washed textiles, and can be selected from 3 to 10 minutes. The air pump 16 works intermittently when started, its switching time is adjustable. After washing has been completed, open the draining valve 14 and then discharge the sewage. Discharge time can be regulated from 3 to 5 minutes according to the amount of water. After discharging water, washing process is repeated at least once again. Then the multipath valve 17 is transposed, the gas in the washing tank is ventilated, and negative pressure is generated, so that water on the textiles shall boil under normal temperature. Steam generated in boiling process being ventilated with air, results in complete drying of the textile. Exhaust time can be regulated from 5 to 10 minutes, and finally turn off the machine.

When the pressure occurring in the washing tank is too low, the pressure safety valve 6 is opened to inlet gas. After finishing the washing, drying, and before removing the textiles, inlet valve 3 is opened in order to open the washing tank cover 4 and inner case cover 20.

### INDUSTRIAL APPLICA BILITY

Said washing method of the invention is realized by the washing machine of the invention. Massive commercial products are utilized in this washing machine, e.g. various valves, an isolation transformer, an air pump, a ceramic sand element, a monolithic processor in the control means, a timing switch and electric circuit elements etc.. Consequently, it is easy in fabrication, low in cost, and facilitated in popularization. In addition, according to the conception of the invention, suitable modification might be conducted on current various washing machines, the technical scheme of non-detergent textile washing can also be implemented, and satisfactory washing effect shall be attained.

## Claims

1. A textile washing method, which comprises two following steps:
(1) generating atomic oxygen and active ions instead of washing powder or liquid to remove the dirt on washed textiles and take part in sterilization;
(2) generating negative pressure to blot water instead of centrifugal drying, and dry the washed textiles.

2. The textile washing method according to claim 1, wherein a bubble generation step is involved between the first step and second step, in which further washing is performed to the washed textiles via an effect generating from bubble movement and ultrasonic wave produced by bubble bursting instead of an effect of pulsator and drum in current washing machine, so as to eliminate the shortcomings of angling and wearing resulted from the pulsator and drum.

3. The textile washing method according to claim 1 or 2, wherein the atomic oxygen and active ions are generated via electrolyzing water, and voltage for electrolyzing water is 1.2-27V, electric current is 0.5-40A; and the negative pressure is produced by an air pump.

4. The textile washing method according to claim 3, wherein the voltage for electrolyzing water is 5V, the electric current is 3A.

5. The textile washing method according to claim 2, wherein the bubbles are generated from the air pump and an air ventilating ceramic sand element.

6. The textile washing method according to claim 4 or 5, wherein a catalyst is added into the electrolyzed water.

7. The textile washing method according to claim 6, wherein said catalyst is salt or alkaline catalyst.

8. The textile washing method according to claim 7, wherein said salt catalyst is sodium chloride, potassium sulfate or magnesium sulfate; said alkaline catalyst is aluminum hydroxide, sodium hydroxide or calcium hydroxide.

9. A washing machine for realizing said washing method of claim 1, which comprises an outer casing (1), a cap (2), a washing tank (5), a pedestal (18), a control means (22), wherein the washing machine further comprises a washing tank cover (4) with tank-opening-lock function, a gas inlet valve (3) and a pressure safety valve (6) installed on the washing tank cover (4), a tank body support (7) sustaining the washing tank (5), an inner case (19) placed in the washing tank (5) and an inner case cover (20) having orifices, a porous barrier (11) and its support (23) installed at the lower part of inner case (19), a back plate (9) installed between the bottom surface of inner case (19) and the inner bottom wall of washing tank (5), an atomic oxygen generator (10) placed in the water of washing machine, an water inlet valve (8) and a draining valve (14) placed at the lower part of outer casing (1) and an isolation transformer (15) installed on the inner bottom wall of outer casing (1), an air pump (16) and a multipath valve (17) having their outlets communicated with inner case (19), in which said atomic oxygen generator (10) is formed by at least two sheets of oppositely spaced metal plates, and the voltage of the generator is 1.2-27V, electric current is 0.5-40A.

10. The washing machine according to claim 9, wherein the washing machine further comprises an air ventilating ceramic sand element (12) installed between the porous barrier (11) and the inner bottom wall of inner case (19), the outlet of air pump (16) is communicated with the inner case (19) via air ventilating ceramic sand element (12).

11. The washing machine according to claim 9 or 10, wherein the washing machine further comprises a catalyst case (13) charged with catalyst installed in the water of washing machine.

12. The washing machine according to claim 11, wherein said voltage is 5V, said electric current is 3A; said atomic oxygen generator (10) is installed on porous barrier (11); said catalyst case (13) is installed between the porous barrier (11) and the inner bottom wall of inner case (19); said catalyst is a salt or alkaline catalyst.

13. The washing machine according to claim 12, wherein said salt catalyst is sodium chloride, potassium sulfate or magnesium sulfate; said alkaline catalyst is aluminum hydroxide, sodium hydroxide or calcium hydroxide.

14. The washing machine according to claim 9,10,12 or 13, wherein the atomic oxygen generator (10) is formed by iron plates, stainless steel plates, nickel plates, titanium plates, copper plates, aluminum plates, platinized metal plates or metal nets.

15. The washing machine according to claim 11, wherein the atomic oxygen generator (10) is formed by iron plates, stainless steel plates, nickel plates, titanium plates, copper plates, aluminum plates, platinized metal plates or metal nets.
